# EUROPÄISCHE PATENTANMELDUNG

(11) **EP 0 831 118 A1**
(43) Veröffentlichungstag der Anmeldung: **25.03.1998**
(21) Anmeldenummer: 97115691.4
(22) Anmeldetag: 10.09.1997
(51) Int. Cl.: C08K 5/00, C08L 21/00

(54) **Leicht transportierbare und zu dosierende Mischungen aus aromatischen Ölen und Phenylendiaminen mit hoher Lagerbeständigkeit**

(30) Priorität: 23.09.1996 DE 19638892
(71) Anmelder: BAYER AG, 51368 Leverkusen (DE)
(72) Erfinder: Laue, Christian, Dr., 40789 Monheim (DE); Preuss, Reinhard, Dr., 25588 Oldendorf (DE); Ruetz, Lothar, Dr., 41541 Dormagen (DE)

(57) **Zusammenfassung**

Die Erfindung betrifft leicht förderbare und leicht zu dosierende Mischungen mit hoher Lagerbeständigkeit, enthaltend aromatische Mineralöle und Phenylendiamine, wobei der Gehalt an Phenylendiaminen im Gemisch 1 bis 99 Gew.-% beträgt. Die erfindungsgemäßen Mischungen aus Mineralölen und Phenylendiaminen finden Verwendung bei der Herstellung von Kautschuken und Kautschukartikeln.

## Beschreibung

Die vorliegende Erfindung betrifft leicht förderbare und leicht zu dosierende Mischungen aus aromatischen Ölen und Phenylendiaminen mit hoher Lagerbeständigkeit sowie deren Verwendung bei der Herstellung von Kautschuken und Kautschukartikeln.

Der Einsatz von Phenylendiaminen bei der Herstellung von Kautschuken und Kautschukartikeln ist bekannt (siehe Hofmann, rubber technology handbook Houser publishers 1989, S. 268 ff.). Die für die Kautschukanwendung, einzusetzenden Phenylendiamine, die bei Raumtemperatur als Feststoff oder als zähe Schmelze vorliegen, werden üblicherweise als Feststoff bei Raumtemperatur oder bei höheren Temperaturen (bis zu 100°C) als flüssige Schmelze verkauft, gelagert, dosiert und transportiert. Die Handhabung als flüssige Schmelze hat den Vorteil gegenüber der Handhabung in Granulat-Form, daß Schmelzen staubfrei sind, eine höhere Dichte als eine Schüttung von Granulat besitzen, pumpbar sind und damit besser misch- und dosierbar.

Nachteilig bei der Handhabung der Phenylendiamine als niederviskose Schmelze ist der Energieaufwand und der technische Aufwand, der zum Transport und Lagerung der heißen Schmelze vonnöten ist. Insbesondere bei Dosierung und Zuführung zu den Mischapparaturen müssen sämtliche Leitungen beheizt sein, da das Produkt nach Abkühlung unter die Schmelztemperatur sofort auskristallisiert und damit die Leitungen verstopft.

Auch der Einsatz von aromatischen Mineralölen ist bei der Herstellung von Kautschuken und Kautschukartikeln bekannt (siehe Hofmann, rubber technology handbook, Houser publishers 1989, S. 296 ff.).

Die dabei eingesetzten aromatischen Öle sind in der Regel zäh-viskos und werden zur Viskositäterniedrigung oft bei erhöhten Temperaturen gelagert, dosiert und den Kautschukmischungen zugemischt. Nachteilig dabei ist ebenfalls der hohe Energieverbrauch und der hohe technische Aufwand für Heizeinrichtungen und Isolation.

Aufgabe der vorliegenden Erfindung war es daher, die aromatischen Öle und die Phenylendiamine in einer leicht transportierbaren und leicht zu dosierenden Form zur Verfügung zu stellen, die außerdem eine hohe Lagerbeständigkeit aufweist.

Die Aufgabe wurde durch die zur Verfügungstellung der erfindungsgemäßen Mischungen aus aromatischen Ölen und Phenylendiaminen gelöst.

Gegenstand der vorliegenden Erfindung sind daher leicht transportierbare und leicht zu dosierende Mischungen mit hoher Lagerbeständigkeit, enthaltend
a) aromatische Mineralöle und
b) Phenylendiamine der Formel 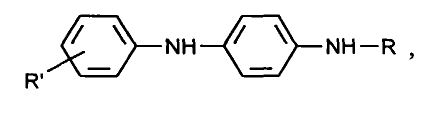 worin
   - R: für einen aliphatischen C₁-C₁₀-Kohlenwasserstoffrest oder für einen gegebenenfalls mit C₁-C₄-Kohlenwasserstoffresten substituierten Phenylrest steht
   und
   - R': für Wasserstoff oder einen aliphatischen C₁-C₄-Kohlenwasserstoffrest steht,
   wobei der Gehalt an Phenylendiaminen im Gemisch 1 bis 99 Gew.-% beträgt.

Als aromatische Mineralöle, die für die erfindungsgemäßen Mischungen geeignet sind, kommen insbesondere solche in Frage welche einen VDK-Wert von 0,001 bis 1,10 besitzen, wie sie in Hofmann, rubber technology handbook houser publishers 1989, S. 296 bis 297 beschrieben sind. Bevorzugt werden eingesetzt solche Mineralöle mit VDK-Werten von 0,93 bis 1,00.

Beispiel geeigneter Mineralöl-Typen sind in Tabelle 1 aufgeführt.

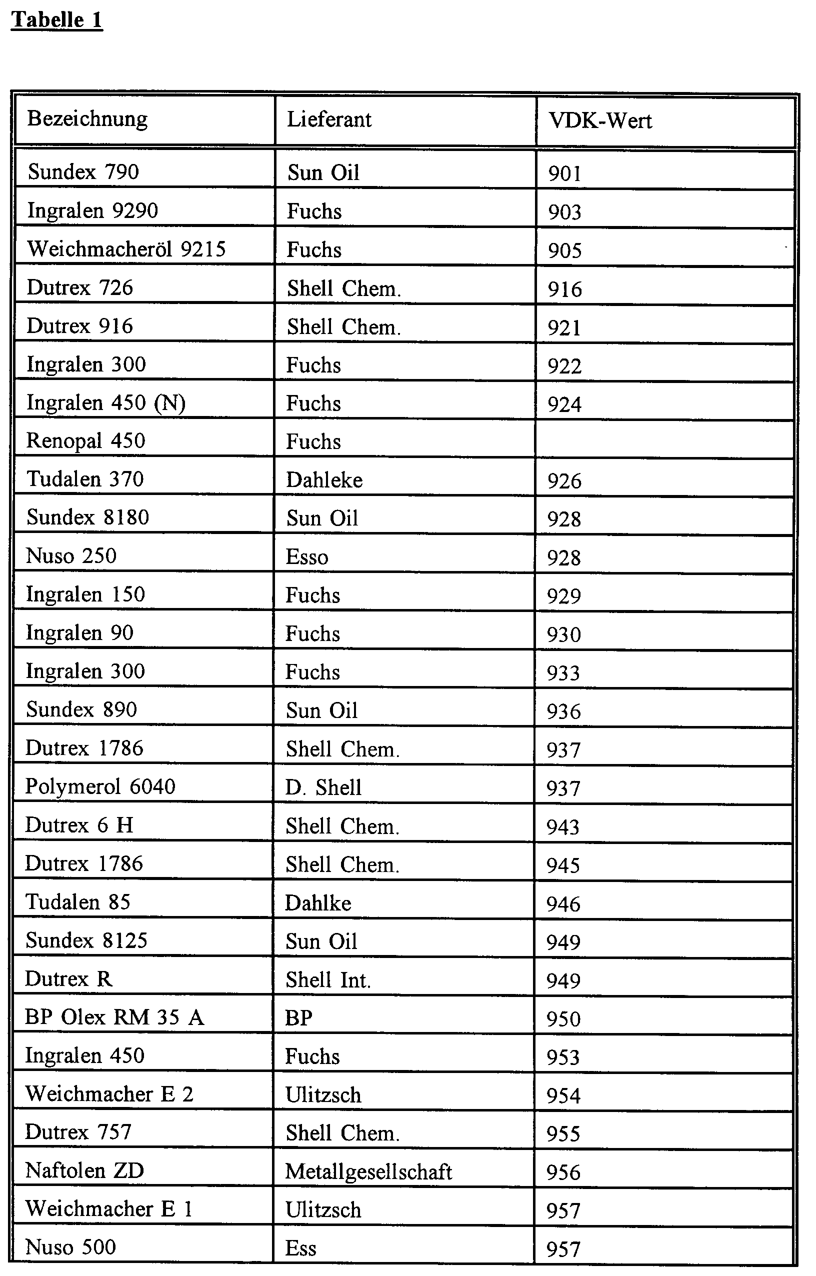

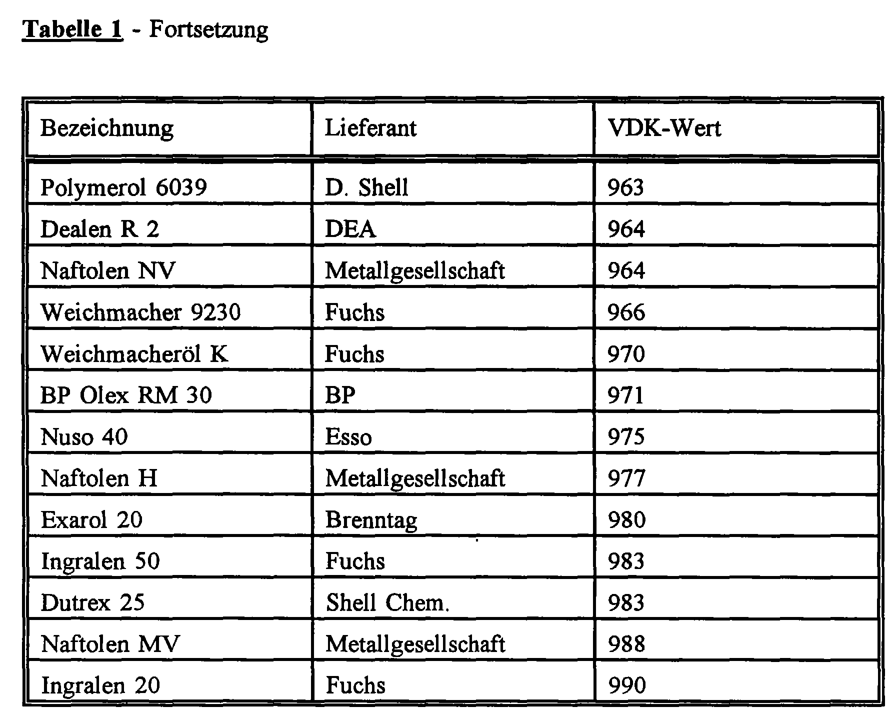

Als Phenylendiamine der obengenannten Formel kommen insbesondere solche in Frage, in denen R für einen Methyl-, Ethyl-, Isopropyl-, 4-Methyl-2-pent-2-yl-, 5-Methyl-hex-2-yl-, Propyl-, Butyl-, Hexyl-Rest oder für einen Phenylrest oder Tolylrest steht. Als Reste R' seien insbesondere genannt Wasserstoff und der Methylrest.

Besonders bevorzugt werden als Phenylendiamine eingesetzt:
N-(1,3-Dimethyl-butyl)-N'-phenyl-p-phenylendiamin (6-PPD),
N-(Isopropyl)-N'-phenyl-p-phenylendiamin,
N,N'-Diphenyl-p-phenylendiamin,
N,N'-Ditolyl-p-phenylendiamin sowie,
N'-Phenyl-N'-tolyl-p-phenylendiamin,
oder Mischungen dieser Verbindungen.

Die Phenylendiamine sowie die aromatischen Öle können sowohl einzeln als auch im Gemisch untereinander eingesetzt werden.

Je nach Einsatzzweck kann es von Vorteil sein, erfindungsgemäße Mischungen zu verwenden, die einen Gehalt an Phenylendiaminen von 1 bis 20 Gew.-%, 20 bis 70 Gew.-% oder 70 bis 99 Gew.-% in dem aromatischen Öl besitzen.

So erreicht man durch Zumischung von ca. 1 bis 20 Gew.-% Phenylendiamin zu den aromatischen Ölen eine Viskositätserniedrigung des aromatischen Öls. Beispielsweise wird bei Zumischung von 10 % Phenylendiaminen der obengenannten Formel eine Viskositätserniedrigung beim aromatischen Öl von 50 % erreicht. Vergleichbare Viskositätserniedrigung beim aromatischen Öl ohne den Zusatz von den Phenylendiaminen wird nur erreicht bei einer ca. 15°C höheren Temperatur.

Bei Raumtemperatur gesättigte Lösungen von Phenylendiamin im aromatischen Öl (20 bis 80 %ige Phenylendiaminlösung) können flüssig umgefüllt, transportiert, dosiert und gelagert werden und benötigen im Gegensatz zu den reinen Schmelzen keine Heizung. Ebenfalls wird die Gefahr des Zusetzens der Leitung bei lokalen Unterkühlungen erwärmter Schmelzen vermieden. Die Löslichkeit von Phenylendiaminen der allgemeinen Formel (I) in aromatischen Ölen ist überraschend, da sich z.B. 6-PPD nicht im merklichen Maße in anderen Weichmacherölen, die für die Gummiindustrie üblich sind, wie in Beispiel 3 gezeigt wird, löst.

Wird den Phenylendiamin-Schmelzen etwa 10 % eines der obengenannten aromatischen Ölen zugemischt (99 bis 80 Gew.-% Phenylendiamin), so erhöht sich überraschenderweise die Stabilität der unterkühlten Schmelzen. So kristallisiert beispielsweise eine auf Raumtemperatur abgeschreckte Schmelze von 6-PPD in ca. 5 bis 10 Minuten, während der Zusatz von 10 % eines aromatischen Öls zu den Phenylendiaminen, deren Kristallisationszeiten auf ca. 5 bis 7 Tage verlängert.

### Beispiel 1

Dieser Versuch soll zeigen, daß eine Zumischung eines aromatischen Öls die Stabilität von unterkühlten Schmelzen von PPD's vergrößert.

Die in Tabelle 2 angegebenen Mischungen wurden eingewogen. Durch Erhitzen auf 80°C wurden homogene Lösungen hergestellt. Anschließend wurden die Lösungen innerhalb von 3 Minuten auf RT abgekühlt und die Zeit bis zum Auftreten von Kristallen wurde beobachtet.

**Tabelle 2**

| % 6-PPD in Renopal® 450 | Zeit bis zum Kristallisieren |
|---|---|
| 100 % | 10 Minuten |
| 90 % | 5 bis 7 Tage |
| 80 % | 9 Tage |
| 70 % | 9 bis 14 Tage |
| 60 % | 9 bis 14 Tage |
| 50 % | 9 bis 14 Tage |
| 40 % | 9 bis 14 Tage |
| Vergleichbare Effekte lassen sich mit den Mineralölen Naftolen H, Naftolen NV, Naftolen ZD, Exarolöl 20 und Enerflex 656 erzielen (Exarolöl) | |

### Beispiel 2

Dieser Versuch zeigt die Viskositätserniedrigung des aromatischen Öls Renopal® 450 durch Zugabe von 10 % 6-PPD (Tabelle 3).

**Tabelle 3**

| | Renopal® 450 | + 10 % 6-PPD |
|---|---|---|
| 21°C | 18.000 | 7.100 [mPas] |
| 40°C | 1.400 | 750 |
| 60°C | 320 | 170 |
| 80°C | 90 | 44 |
| Renopal® ist ein Produkt der Fa. Fuchs (Mannheim) mit folgenden physikalischen Daten: VDK: 0,950 | | |

### Beispiel 3

Es lassen sich bei RT 25 %ige Lösungen von 6-PPD in Renopal® 450 herstellen. Vergleichsversuch: Folgende Weichmacheröle für die Gummiindustrie besitzen keine nennenswerte Löslichkeit für 6-PPD:
Adimoll DO = Dioctyladipat, Bayer AG, Dormagen
Mesamoll = Alkylsulfonsäureester des Phenols, Bayer AG, Dormagen
Ecubsol-Öl = Alkylat, UK Mineralölwerke Wenzel und Weidmann - Eschweiler
Exarol-Öl = Fa. Brenntag

## Patentansprüche

1. Leicht transportierbare und leicht zu dosierende Mischungen mit hoher Lagerbeständigkeit, enthaltend
a) aromatische Mineralöle und
b) Phenylendiamine der Formel 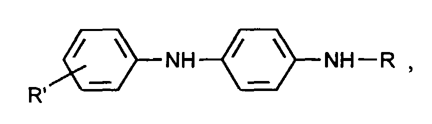 worin
R für einen aliphatischen C₁-C₁₀-Kohlenwasserstoffrest oder für einen gegebenenfalls mit C₁-C₄-Kohlenwasserstoffrest substituierten Phenylrest steht
und
R' für Wasserstoff oder einen aliphatischen C₁-C₄-Kohlenwasserstoffrest steht,
wobei der Gehalt an Phenylendiaminen im Gemisch 1 bis 99 Gew.-% beträgt.

2. Mischungen nach Anspruch 1, dadurch gekennzeichnet, daß sie einen Gehalt an Phenylendiamin von 1 bis 20 Gew.-% enthalten.

3. Mischungen nach Anspruch 1, dadurch gekennzeichnet, daß sie einen Gehalt an Phenylendiamin von 20 bis 70 Gew.-% enthalten.

4. Mischungen nach Anspruch 1, dadurch gekennzeichnet, daß sie einen Gehalt an Phenylendiaminen von 70 bis 99 Gew.-% enthalten.

5. Verwendung der Mischungen nach Anspruch 1 bei der Herstellung von Kautschuken und Kautschukartikeln.
